# EUROPEAN PATENT APPLICATION

(11) **EP 0 522 165 A1**
(43) Date of publication of application: **13.01.1993**
(21) Application number: 92901875.2
(22) Date of filing: 26.12.1991
(51) Int. Cl.: B23Q 15/00, G05B 19/403, G05B 19/405

(54) **METHOD FOR CREATING NC DATA**

(30) Priority: 27.12.1990 JP 414985/90
(71) Applicant: FANUC LTD., Minamitsuru-gun, Yamanashi 401-05 (JP)
(72) Inventor: SEKI, Masaki 5-17-23, Kugayama, Tokyo 168 (JP); TAKEGAHARA, Takashi 256-2, Nishiteragata-machi, Tokyo 192-01 (JP); MATSUNAKA, Toru 1734-7, Hizumi, Yamaguchi 742-01 (JP)
(74) Representative: Billington, Lawrence Emlyn
(86) International application number: JP9101777
(87) International publication number: WO9211973

(57) **Abstract**

A method of creating NC data which makes it easy to create a machining program for machining a work by a plurality of tool rests. First, the respective machining processes of the tool rests are specified to create a machining process file F1 in an automatic programming device. The machining programs of the machining processes are separately inputted to the automatic programming device to create a machining program file. The automatic programming device converts the machining programs to NC data (S7) according to the machining processes (S4, S8) for the tool rests (S1, S9) to obtain the NC data for machining processes separately.

## Description

### Technical Field

The present invention relates to a method for preparing an NC data for the working by a machine tool with a plurality of tool rests, which uses an automatic programming apparatus for preparing the NC data.

### Background Art

In preparing work programs (NC data) for simultaneously or continuously working a workpiece by means of a plurality of tool rests of a machine tool using an automatic programming apparatus, the work programs are prepared taking account of work stages (work procedure). When working one workpiece using two sets of tool rests, the work programs must be prepared considering such factors as the working sequence, whether the working can be executed using the two tool rests simultaneously or whether the working has to be executed using only one tool rest. Accordingly, work programs (part programs) are prepared and inputted individually for the two tool rests, taking account of the work stages.

On the other hand, the conventional automatic programming apparatus is designed so that work program data for the next work stage can be inputted only after work program data for preceding work stage is inputted. Thus, a work programmer must prepare the work programs for the individual work stages in regular order from the beginning, in consideration of the work stages for the entire working.

In preparing the work program preparation by the conventional automatic programming apparatus, as described above, the work stages and the work programs for the individual work stages must be prepared simultaneously, so that the work programmer must prepare and input the work programs successively from the beginning of the work stages, comprehending and considering the work stages where the working is required to be executed using two or more tool rests. This presents an inconvenience to the programmer.

### Disclosure of the Invention

The object of the present invention is to provide an NC data preparation method which facilitates the preparation of work programs used in working a workpiece by means of a plurality of tool rests.

In order to achieve the above object, according to an aspect of the present invention, there is provided a method for preparing NC data for simultaneous or continuous working using a plurality of tool rests, which uses an automatic programming apparatus for preparing the NC data, and in which are executed a first stage for inputting and setting a work program name for working by means of each tool rest, with respect to a work stage number indicative of the work order, a second stage for preparing and inputting a work program of each set work program name, and a third stage for preparing the NC data in accordance with the work program inputted in the second stage, on the basis of the work program name set in the first stage by means of the automatic programming apparatus.

In the third stage of the above aspect, the NC data is preferably prepared in a manner such that a queuing code is added with every tool rest and with every change of the stage number.

Alternatively, a queuing code is previously added to the head of each work program in the second stage of the above aspect, and only the queuing code is inputted if the work program name is not inputted for the work stage number in the third stage.

In modifying the NC data prepared by the method according to the above aspect, modified NC data is generated in a manner such that only the order of the work program name set in the first stage is modified and inputted, and the third stage is executed.

According to another aspect, there is provided a method for preparing NC data for simultaneous or continuous working by means of a plurality of tool rests, which uses an automatic programming apparatus for preparing the NC data, in which a work program file is previously stored with various work program names and work programs, a work program name for working by means of each tool rest, with respect to a work program name number indicative of the work order, is inputted and set, and a work program of the set work program name is read out from the work program file, to prepare the NC data.

Preferably, in this aspect, the NC data is prepared in a manner such that a queuing code is added with every tool rest and with every change of the stage number, as the work program is read out from the work program file.

Alternatively, various work programs such that a queuing code is added to the head of each work program are previously set and stored in the work program file, and the NC data is prepared by adding only the queuing code if the work stage is not inputted for the work stage number.

According to the method of the present invention, work stages are first inputted and set in the automatic programming apparatus. Thereafter, the work programs for the individual work stages are prepared and inputted, and an NC data preparation command is inputted. Thereupon, the automatic programming apparatus, based on the set work stages, executes the inputted work programs for the individual work stages, and converts them into NC data.

According to the present invention, as described above, the work stages and the work programs for the individual work stages for each tool rest can be prepared separately, so that the work stages can be prepared independently, and the work programs can also be prepared independently without giving consideration to the work stages. Thus, a programmer need not simultaneously consider the work stages and the work programs, which are in different categories, as he prepares them, and therefore, can reduce programming errors.

### Brief Description of the Drawings

Fig. 1 is a flow chart showing an NC data preparing process according to one embodiment of the present invention;
Fig. 2 is a flow chart showing a work stage assigning process according to the embodiment;
Fig. 3 is a flow chart showing a preparation process for each work program (part program) according to the embodiment; and
Fig. 4 is a block diagram showing the principal part of an automatic programming apparatus for carrying out the embodiment.

### Best Mode of Carrying Out the Invention

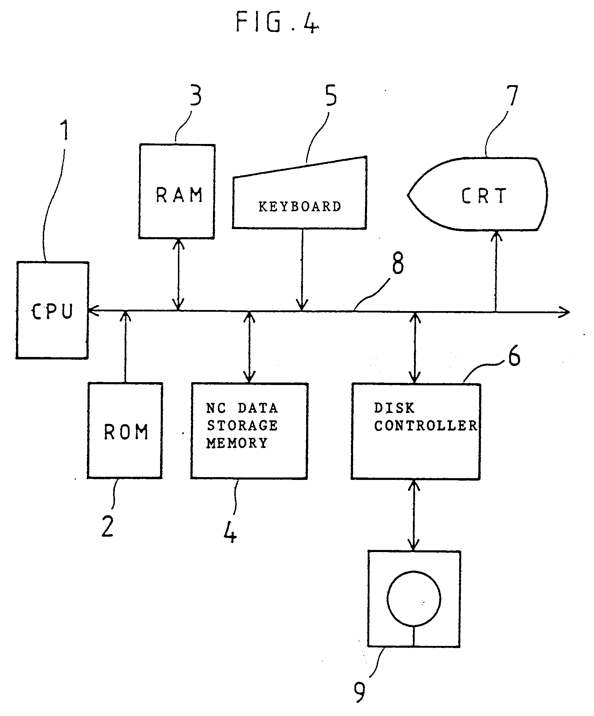

Referring to the block diagram of Fig. 4, an automatic programming apparatus according to one embodiment for carrying out a method of the present invention comprises a processor (CPU) 1, a ROM 2, a RAM 3, an NC data storage memory 4 formed of a nonvolatile memory, a keyboard 5, a disk controller 6, and a CRT display device 7. These elements 1 to 7 are connected by means of a bus 8.

The ROM 2 is loaded with control programs for controlling the automatic programming apparatus. The RAM 3 stores system programs loaded from a floppy disk 9 by means of the disk controller 6, part programs prepared by dialogic operation through the CRT display device 7, keyboard 5, etc., various data, and the like. The NC data storage memory 4 stores NC data prepared by the automatic programming apparatus. The keyboard 5 has conventional character keys, ten-keys, and various command keys.

The following is a description of the operation of the present embodiment. Let it be supposed that the RAM is previously loaded with the system programs from the floppy disk 9 through the disk controller 6.

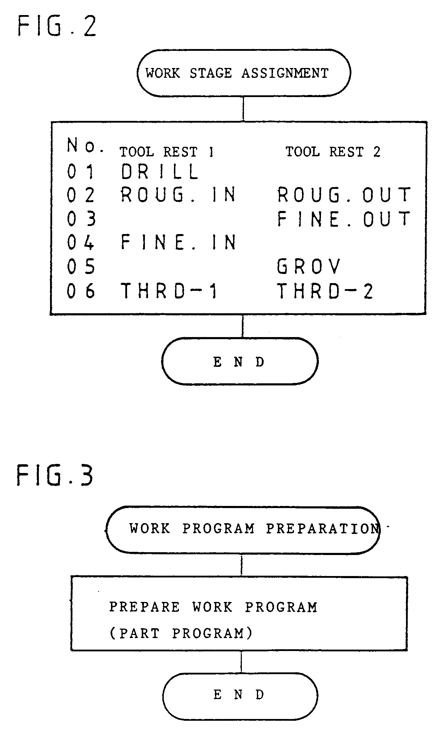

First, the automatic programming apparatus is set to a work stage assigning mode, and work program names for tool rests are inputted. The present embodiment represents a case in which two tool rests are used. When the automatic programming apparatus is set to the work stage assigning mode, the processor 1 starts a work stage assigning process. When a programmer inputs the tool rests 1 and 2 to be used and then work stage numbers, the processor 1 causes the CRT display device 7 to display the inputted tool rests 1 and 2 in a horizontal row and the work stage numbers in a vertical row on the screen, as shown in Fig. 2.

The programmer inputs the work program names for the tool rest used in work stages corresponding to the work stage numbers. Referring to Fig. 2, a work program name "DRILL" is first inputted, for example, when starting drilling work using the tool rest 21.

In the next work stage or Work Stage No. 02, in executing inside-diameter rough machining and outside-diameter rough machining using the tool rests 1 and 2 respectively, an outside-diameter rough machining program name "ROUG. IN" and an inside-diameter rough machining program name "ROUG. OUT" are inputted and set for the first and second tool rests 1 and 2 respectively.

In executing only outside-diameter fine machining by the tool rest 2 in the next work stage or Work Stage No. 03, an outside-diameter fine machining program name "FINE. OUT" is inputted and set for the tool rest 2.

In executing inside-diameter fine machining by the tool rest 1 in Work Stage No. 04, an inside-diameter fine machining program name "FINE. IN" is inputted and set for the tool rest 1.

In executing grooving work by the tool rest 2 in Work Stage No. 05, a grooving work program name "GROV" is inputted and set for the tool rest 2.

In executing threading work by the tool rests 1 and 2 in Work Stage No. 06, program names "THRD-1" and "THRD-2" are set for the tool rests 1 and 2 respectively.

In finishing all the work stages in Work Stage No. 06, no subsequent work stage number is inputted.

When the data indicative of an end of setting is inputted following the setting of the works to be executed by the tool rests 1 and 2 and their order, the processor 1 causes the RAM 3 to be loaded with the inputted data as a work stage file F1.

Then, the programmer brings the automatic programming apparatus to a work program preparation mode, whereupon a work program (part program) is prepared in the same manner as in the conventional case with every work program name set as a work stage, as shown in Fig. 3. The processor 1 causes the RAM 3 to be loaded with each work program as a work program file F2.

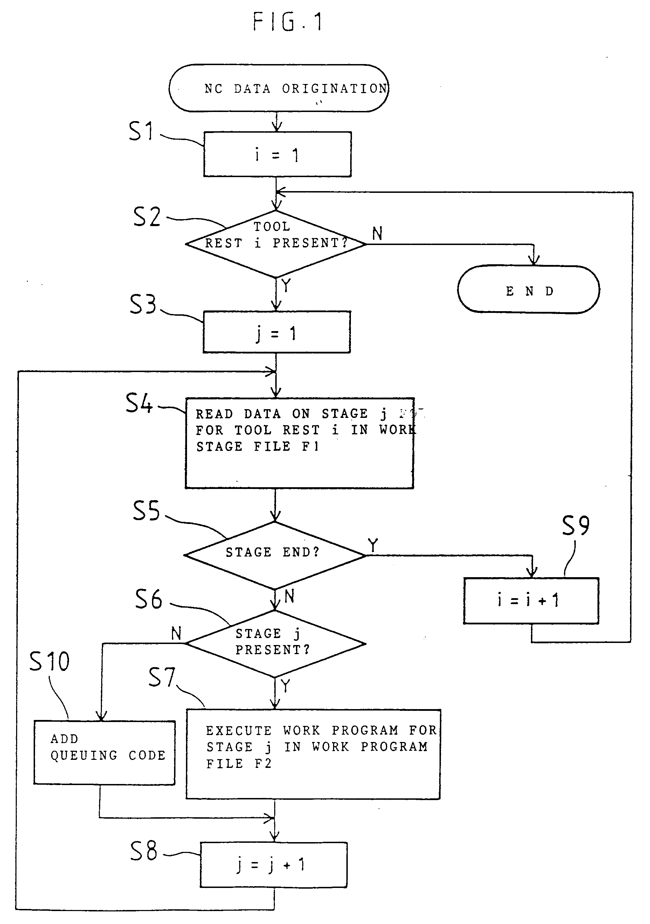

Finally, when a command for the preparation of NC data is inputted, the processor 1 starts a process shown in the flow chart of Fig. 1. First, an index i is set to "1" (Step S1) to judge whether or not a tool rest i represented by the index i is set in the work stage file F1 (Step S2). If the tool rest i is set, an index j is set to "1" (Step S3), and work stage number data (program name) in the work stage file F1, represented by the index j (= 1) for the tool rest i, will be read (Step S4). If no work stage number corresponding to the index j is set in the work stage file F1, it is concluded that the stage is finished, and the program proceeds from Step S5 to Step S9.

If the work stage number is set, confirmation will be made as to whether or not there is data (work program name) for the tool rest i in the work stage j (Step S6). If there is the data, the work program in the work program file F2 corresponding to the read data will be read out, and a queuing code is written, as NC data, at the head. Also, the read work program (part program) is executed to prepare the NC data, which is loaded into the NC data storage memory 4 (Step S7). Then, the index j is incremented by "1" (Step S8), whereupon the program returns to Step S4. If no data for the tool rest i is set in the work stage j, only the queuing code is written as the NC data (Step S10), whereupon the program proceeds to Step S8.

Thereafter, the processes of Steps S4 to S8 and S10 will be repeated, whereby the NC data for the tool rest i (= 1) will be prepared, and the index j will be updated. If no work stage number corresponding to the index j is set in the work stage file F1, it is concluded that the stage is finished, and the program proceeds from Step S5 to Step S9. In the example shown in Fig. 2, the index j becomes "7," and Work Stage No. 07 is not set, so that the program proceeds from Step S5 to Step S9.

The index i is incremented by "1" (i = 2) in Step S9, whereupon the program returns to Step S2. If the tool rest i corresponding to the index i is set in the work stage file F1, the process of Step S3 and its subsequent processes will be executed in the aforesaid manner, whereby the NC data for the tool rest i (i = 2) will be prepared.

If the work stage j is not set in the work stage file F1 when the NC data for each work stage j of the tool rest i for the index i is prepared in this manner, the program proceeds from Step S5 to Step S9, whereupon the index i is incremented by "1." If the tool rest i for the index i is not set in the work stage file F1, the NC data preparation process will be finished.

In checking the NC data thus prepared, the keyboard is operated to cause the CRT display device 7 to display on its screen the NC data stored in the NC data storage memory 4, as in the conventional case. In changing the work stage order, the work stage process shown in Fig. 2 is executed again after establishing the work stage assigning mode, and the work program preparation mode shown in Fig. 3 is skipped, and the NC data preparation command is inputted. By doing this, the process shown in Fig. 1 is executed to prepare modified NC data.

Alternatively, various work programs may be previously set and stored in the work program file F2 so that the work stage can be set by selecting a necessary work program out of the stored work programs, whereby various NC data can be originated.

In the NC data origination process of the flow chart of Fig. 1 described above, the queuing code is written, as the NC data, at the head in Step S7. Alternatively, however, the queuing code may be added to the head of each work program when the work program is previously prepared and loaded into the work program file. If this is done, the operation for adding the queuing code to the head of the work program every time the work program is invoked from the work program file in Step S7 of the flow chart of Fig. 1 can be omitted. If the work program name for the tool rest i is not set in the work stage j, however, only the queuing code is written as the NC data in Step S10, as in the case of the process of the flow chart of Fig. 1.

In operating a machine tool according to the NC data thus prepared, working for the next work stage will be started from the moment or only when the queuing code is read for any of the tool rests, as in the conventional case. Whereas, even though the top queuing code (or a plain queuing code) of the work program for the next stage is already read after the operation by one or some of a plurality of tool rests are finished, no operation of the next stage for any of the tool rests can be started if the operation for the remaining tool rests is still in progress, and therefore, if the queuing code of the next stage is not read yet.

This situation will be described in connection with the case shown in Fig. 2. If a first block of the work program for the tool rest 1, that is, a queuing code at the head of a stage DRILL, and a first block or queuing code for the tool rest 2 are first read, then it is concluded that the queuing code is read for any of the tool rests. Accordingly, blocks subsequent to these blocks are read, and first stage operations for all the tool rests are started simultaneously. For the tool rest 2, however, the top queuing code of a stage ROUG. OUT (second stage) is read in a subsequent block or second block. During the time interval from this point of time until the operation of the stage DRILL (first stage) for the tool rest 1 ends, however, the next queuing code for the tool rest 1, that is, the top queuing code of the second stage ROUG. IN, is not read. During this time interval, therefore, no queuing code can be read for any tool rest, so that the second stage cannot be started. Thus, during the execution of the operation of the first stage DRILL for the tool rest 1, the operation of the second stage ROUG. OUT for the tool rest 2 cannot be started.

When the top queuing code of the second stage ROUG. IN is read in the next block after the operation of the first stage DRILL for the tool rest 1 is finished, it is concluded that the queuing code is read for any of the tool rests only at this point of time, so that the operation of the second stage is started for each tool rest. Thus, the operation ROUG. IN for the tool rest 1 and ROUG. OUT for the tool rest 2 are started simultaneously.

When the operation of the second stage for the tool rest 1 is finished, the head of a work program for a third stage is read in the next block (Since no data but only a queuing code is inputted for this stage in the case illustrated, this queuing code is read.). If the operation of the second stage for the tool rest 2 is still in progress at this point of time, then the top queuing code of the third stage FINE. OUT is not read yet. It is concluded, therefore, that no queuing code is read for any of the tool rests, so that the third stage will not be started. On the other hand, if the queuing code at the head of the work program for the third stage has been read in the next block following the finish of the operation of the second stage for the tool rest 2 when the queuing code of the third stage is read in the next block following the finish of the operation of the second stage for the tool rest 1, then it is concluded that the queuing code is read for any of the tool rests, and the operation of the third stage for each tool rest will be started. The same process will be repeated thereafter.

As described above, according to the present invention, the work stages and the work programs for the individual work stages for each tool rest can be prepared separately, so that the work stages and the work programs can be prepared even by the persons other than the original programmer. Thus, the work programs can be prepared with high efficiency.

Further, the work stages can be prepared independently from the work programs, and thus the work programs can also be prepared independently without giving consideration to the work stages, so that the work stages and the work programs, which are in different categories, need not be considered simultaneously. Thus, programming errors can be reduced.

## Claims

1. A method for preparing NC data for simultaneous or continuous working using a plurality of tool rests, which uses an automatic programming apparatus for preparing the NC data, comprising:
a first stage for inputting and setting a work program name for working by means of each tool rest, with respect to a work stage number indicative of the work order;
a second stage for preparing and inputting a work program of each said set work program name; and
a third stage for preparing the NC data in accordance with the work program inputted in said second stage, on the basis of the work program name set in said first stage by means of said automatic programming apparatus.

2. An NC data preparation method according to claim 1, wherein the NC data is prepared in said third stage in a manner such that a queuing code is added with every tool rest and with every change of the stage number.

3. An NC data preparation method according to claim 1, wherein a queuing code is previously added to the head of each work program in said second stage, and only the queuing code is inputted if the work program name is not inputted for the work stage number in said third stage.

4. An NC data preparation method for generating modified NC data in a manner such that, in modifying the NC data prepared by the method according to claim 1, only the order of the work program name set in said first stage is modified and inputted, and said third stage is executed.

5. A method for preparing NC data for simultaneous or continuous working by means of a plurality of tool rests, which uses an automatic programming apparatus for preparing the NC data, the NC data preparation method comprising:
previously storing a work program file with various work program names and work programs;
inputting and setting a work program name for working by means of each tool rest, with respect to a work program name number indicative of the work order; and
reading out a work program of said set work program name from said work program file, to prepare the NC data.

6. An NC data preparation method according to claim 5, wherein the NC data is prepared in a manner such that a queuing code is added with every tool rest and with every change of the stage number, as the work program is read out from said work program file.

7. An NC data preparation method according to claim 5, wherein various work programs such that a queuing code is added to the head of each work program are previously set and stored in the work program file, and the NC data is prepared by adding only the queuing code if the work stage is not inputted for the work stage number.
